(19) Europäisches Patentamt
European Patent Office
Office européen des brevets

(11) **EP 2 517 348 B1**

(12) **EUROPÄISCHE PATENTSCHRIFT**

(45) Veröffentlichungstag und Bekanntmachung des Hinweises auf die Patenterteilung:
**18.07.2018 Patentblatt 2018/29**

(21) Anmeldenummer: **10805201.0**

(22) Anmeldetag: **20.12.2010**

(51) Int Cl.:
***H02M 7/48*** (2007.01)

(86) Internationale Anmeldenummer:
**PCT/EP2010/007794**

(87) Internationale Veröffentlichungsnummer:
**WO 2011/076374 (30.06.2011 Gazette 2011/26)**

(54) **VERFAHREN ZUR REGELUNG EINES ZEITVARIANTEN SYSTEMS**

METHOD FOR CONTROLLING A TIME-VARIANT SYSTEM

PROCÉDÉ DE RÉGULATION D'UN SYSTÈME VARIANT DANS LE TEMPS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2009 DE 102009060529**

(43) Veröffentlichungstag der Anmeldung:
**31.10.2012 Patentblatt 2012/44**

(73) Patentinhaber: **Avasition GmbH**
**44227 Dortmund (DE)**

(72) Erfinder: **HEISING, Carsten**
**44225 Dortmund (DE)**

(74) Vertreter: **Cohausz Hannig Borkowski Wißgott Patent- und Rechtsanwaltskanzlei**
**Schumannstrasse 97-99**
**40237 Düsseldorf (DE)**

(56) Entgegenhaltungen:
• **FOELLINGER O: "Entwurf zeitvarianter Systeme durch Polvorgabe = Design of time varying systems by pole assignment", REGELUNGSTECHNIK,, Bd. 26, Nr. 6, 1. Januar 1978 (1978-01-01) , Seiten 189-196, XP009148225, ISSN: 0340-434X**

**Beschreibung**

Die vorliegende Erfindung betrifft ein Verfahren zur Regelung eines zeitvarianten Systems, insbesondere eines schaltenden leistungselektronischen Umrichtersystems mit Halbleiterschaltern, das durch ein Differenzialgleichungssystem in der Form eines Zustandsraummodells gemäß dx/dt = A x(t) + B u(t) beschreibbar, bei dem x(t) ein Vektor mit einer oder mehreren Zustandsgrößen, A die Systemmatrix, B die Steuermatrix und u(t) ein Vektor mit wenigstens einer Eingangsgröße des Systems ist, wobei zumindest eine der Zustandsgrößen multiplikativ mit einem veränderlichen Systemparameter verknüpft ist, und zumindest eine der Zustandsgrößen oder zumindest eine der Ausgangsgrößen über einen Regler mit einer Reglermatrix K auf wenigstens eine Eingangsgröße negativ rückgekoppelt ist. Weiterhin betrifft die Erfindung ein Datenverarbeitungsprogramm zur Ausführung des Verfahrens, einen Datenträger mit einem solchen Datenverarbeitungsprogramm sowie ein Datenverarbeitungssystem, auf das ein solches Datenverarbeitungsprogramm geladen ist.

Für die Regelung komplexer technischer Systeme ist eine hinreichend naturgetreue Nachbildung des Systems als mathematisches Modell notwendig, um Informationen über nichtmessbare aber für die Regelung notwendige Zustandsgrößen des Systems zu erhalten. Das Modell des Systems kann durch einen Satz Differenzialgleichungen gebildet werden, die in Matrixschreibweise als sogenanntes Zustandsraummodell wie folgt formulierbar sind:

$$dx/dt = A{\cdot}x(t) + B{\cdot}u(t),$$

$$y(t) = C{\cdot}x(t) + D{\cdot}u(t),$$

wobei x(t) ein Vektor der zeitabhängigen Zustandsgrößen, A die Systemmatrix, u(t) ein Vektor der zeitabhängigen Eingangsgrößen, B die Steuermatrix, y(t) ein Vektor der zeitabhängigen Ausgangsgrößen, C die Beobachtungsmatrix und D die Durchgangsmatrix eines Systems darstellt. Dieses Zustandsraummodell kann zur Untersuchung der Eigenschaften eines Systems, insbesondere dessen Verhalten und Stabilität verwendet werden. Die Verwendung der Zustandsraumdarstellung hat den Vorteil, dass Ein- und Mehrgrößensysteme formal gleich behandelt werden können, diese Darstellung sowohl für die theoretische, insbesondere für die analytische Lösung und Optimierung, als auch für die numerische Berechnung, insbesondere für die Implementierung einer Regelung auf einer programmierbaren Vorrichtung, gut geeignet sind.

Die vorliegende Erfindung befasst sich mit dem technischen Problem der Beobachtung zeitvarianter, insbesondere schaltender Umrichtersysteme zu Regelungszwecken, wie sie bei Anordnungen mit elektronischen Halbleiterschaltern entstehen. Beispielhaft seien leistungselektronische Systeme, wie Frequenzumrichter mit Stromrichtern und Zwischenkreis angesprochen, die beispielsweise Drehstrommotoren speisen und/ oder Energie eines Drehstromgenerators in ein Drehstromspannungsnetz einspeisen. Die Verwendung von elektronischen Schaltelementen führt zu zeitvarianten Systemeigenschaften, so dass eine zeitabhängige Systemmatrix A(t) entsteht, bei der zumindest ein Element eine Funktion der Zeit ist. Durch das Umschalten des Systems von einem Zustand zu einem Anderen verändern sich die Eigenwerte des Systems in ihrer Lage sprunghaft. Einzelne Zustände können instabil sein, andere stabil oder grenzstabil. Der Entwurf einer stabilen Regelung für derartige Systeme gestaltet sich daher schwierig. Eine vollständige Beobachtung des Systems ist nicht ohne Informationsverlust möglich.

Für zeitinvariante Systeme, d.h. Systeme mit konstanter Systemmatrix A, sind Regler, insbesondere Mehrgrößenregler hinreichend bekannt und in der Literatur ausführlich beschrieben, z.B.: Unbehauen, Regelungstechnik II, 9. Aufl., Vieweg Verlag 2007; Lunze Regelungstechnik 2, 3. Aufl., Springer Verlag 2005. Der Regler beeinflusst die Stellgröße u, d.h. der Eingangsgröße des Systems, in Abhängigkeit von der Regelabweichung, d.h. der Differenz zwischen einer Führungsgröße (=Sollwert) und einer Zustands- oder Ausgangsgröße des Systems, von denen eine auf den Reglereingang negativ rückgekoppelt ist. Bei komplexen Systemen sind häufig mehrere Stellgrößen zu regeln, so dass von einem Mehrgrößenregler gesprochen wird. Dieser kann mittels Zustandsraummodell leicht behandelt werden.

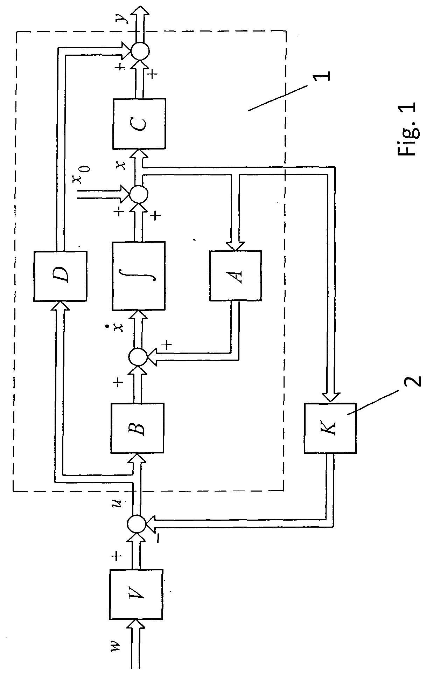

Die regelungstechnische Struktur eines solchen Reglers 2 mit Zustandsrückführung ist in Figur 1 dargestellt. Sie visualisiert das obengenannte Zustandsraummodell eines zu regelnden Systems 1, dass die Regelstrecke des rückgekoppelten Regelkreises bildet. Die Zustandsgrößen x des Systems 1 sind dem Regler 2 mit einer Reglermatrix K zugeführt. Der Regler 2 ist ein Proportionalregler. Er koppelt die Zustandsgrößen x als mehr oder weniger gewichtete Linearkombinationen auf die Eingangsgrößen u negativ zurück. Je nach Reglergesetz können dabei auch Wirkungen von einer, einzelner oder mehrerer Zustandsgrößen $x_i$ auf eine oder mehrere Eingangsgrößen u eliminiert werden, wobei der Regler 2 diese Zustandsgrößen $x_i$ dann mit null multipliziert. Die Werte am Reglerausgang werden von den Eingangsgrößen u des Systems 1 subtrahiert, so dass eine Fehlerabweichung e = u - K·x vorliegt, die die Eingangsgröße des Systems bildet. Bei Systemen mit einer zeitabhängigen Systemmatrix, wie sie bei schaltenden Umrichtersystemen vorliegt, kann es der Fall sein, dass das System selbst stabil ist, jedoch das Gesamtsystem bestehend aus Regler, Regelstrecke und Rückkopplung, ein oder mehrere Systemzustände aufweist, die instabil oder grenzstabil sind. Gemäß Stand der Technik werden die auftretenden zeitvarianten Instabilitäten nicht direkt, sondern lediglich indirekt durch eine robuste Auslegung des Reglers berücksichtigt.

Die Regelungsmethoden nach dem Stand der Technik berücksichtigen nicht das zeitvariante Verhalten von Systemen. Bei einer robusten Auslegung des Reglers kann das System in direkter Konsequenz zwar um einen Arbeitspunkt stabilisiert werden, jedoch auf Kosten einer reduzierten Dynamik des Reglers. Dieses führt im Zeitbereich zu einem schlechten Führungsverhalten bzw. einer schlechten Sollwertfolge und einer schlechten Störunterdrückung.

Es sind keine Ansätze für Regler bekannt, die die durch das Springen der Systemzustände zumindest temporär vorliegende Instabilität berücksichtigen oder sogar verhindern können.

Die Veröffentlichung O. Föllinger: "Entwurf zeitvarianter Systeme durch Polgabe - Design of time varying systems by pole assignment", Regelungstechnik Band 26, Heft 6, 1. Januar 1978, Seiten 189-196, ISSN: 0340-434X beschreibt ein Verfahren für einen Reglerentwurf bei stetigen bzw. linearen zeitvariablen Systemen durch Vorgabe der Pole, so dass die zeitvarianten Eigenschaften des Systems durch den Regler eliminiert werden. Der Regler wird somit derart entworfen, dass die Zustandsmatrix des rückgekoppelten Gesamtsystems konstant wird. Die durch das Springen der Systemzustände zumindest temporär vorliegende Instabilität bei schaltenden Umrichtersystemen kann durch die Entwurfsmethode von Föllinger nicht verhindert werden.

Es ist Aufgabe der vorliegenden Erfindung, einen Regler für ein zeitvariantes System, insbesondere ein schaltendes leistungselektronisches Umrichtersystem mit Halbleiterschaltern bereitzustellen, der die Stabilität des Gesamtsystems aus Regler, Regelstrecke und Rückkopplung in jeder Schaltperiode und mit verbesserter Dynamik gewährleistet.

Die Aufgabe wird durch das Verfahren nach Anspruch 1 gelöst. Vorteilhafte Weiterbildungen der Erfindung sind in den Unteransprüchen formuliert.

Erfindungsgemäß wird ein Verfahren zur Regelung eines zeitvarianten Systems, insbesondere eines schaltenden leistungselektronischen Umrichtersystems mit Halbleiterschaltern vorgeschlagen, das durch ein Differenzialgleichungssystem in der Form eines Zustandsraummodells gemäß $dx/dt = A\,x(t) + B\,u(t)$ beschreibbar ist, bei dem $x(t)$ ein Vektor mit einer oder mehreren Zustandsgrößen ($x_i$), A die Systemmatrix, B die Steuermatrix und $u(t)$ ein Vektor mit wenigstens einer Eingangsgröße ($u_i$) des Systems ist, wobei zumindest eine der Zustandsgrößen ($x_i$) multiplikativ mit einem veränderlichen Systemparameter ($\rho(t)$) verknüpft ist, zumindest eine der Zustandsgrößen ($x_i$) oder zumindest eine der Ausgangsgrößen ($y_i$) über einen Regler mit einer Reglermatrix K auf wenigstens eine Eingangsgröße ($u_i$) negativ rückgekoppelt ist, und wobei zumindest eine der über den Regler rückgekoppelten Zustandsgrößen ($x_i$) oder Ausgangsgrößen ($y_i$) mit dem in einem Element der Reglermatrix K enthaltenen veränderlichen Systemparameter ($\rho(t)$) oder einem abschnittsweise gemittelten Wert ($\rho_{Tp}(t)$) des veränderlichen Systemparameters ($\rho(t)$) multipliziert wird.

Die Grundidee der Erfindung liegt darin, einen Regler für ein rückgekoppeltes, zeitvariantes, insbesondere schaltendes System zu verwenden, der destabilisierende, zeitvariante Systemeigenschaften, die z.B. in leistungselektronischen Umrichtersystemen durch Schalten des Systems auftreten, aktiv kompensiert. Dazu wird das Reglergesetz derart formuliert, dass die zeitvarianten Systemeigenschaften, die sich in zumindest einem veränderlichen Systemparameter niederschlagen, Teil des Reglergesetzes sind. Im Detail wird die zeitvariante Systemeigenschaft in Gestalt einer diese Eigenschaft beschreibenden, zeitabhängigen Funktion $\rho(t)$ in die

Reglermatrix K eingebunden, um über die Rückkopplung die Reglerstrecke zu stabilisieren. Stabilität wird hierdurch garantiert und das Systemverhalten verbessert.

Die Verwendung des veränderlichen Systemparameters im Reglergesetz, d.h. in der Reglermatrix bewirkt, dass die Eigenwerte des Gesamtsystems, d.h. des zu regelnden Systems, Regler und Rückkopplung stets in der linken komplexen Halbebene liegen und somit Stabilität in jedem Systemzustand vorliegt. Dies wird nachfolgend noch erläutert. Dabei kann die Rückkopplung, auch Rückführung genannt, eine Zustandsrückführung sein, bei der wenigstens eine Zustandsgröße dem Regler zugeleitet wird, oder eine Ausgangsrückführung sein, bei der wenigstens eine Ausgangsgröße dem Regler zugeleitet wird, wobei der Reglerausgang in beiden Fällen auf den Eingang des Systems negativ rückgekoppelt ist, d.h. von einer der Eingangsgrößen subtrahiert wird. Die Ausgangsgrößen bilden sich gemäß oben angegebener Gleichung aus $y(t) = C\cdot x(t) + D\cdot u(t)$, wobei die Ausgangsgrößen für den Fall, dass die Steuermatrix C der Einheitsmatrix entspricht und kein Durchgriff D existiert, gleich den Zustandsgrößen sind. In diesem Fall ist folglich eine Ausgangsrückführung gleichwirkend einer Zustandsrückführung.

Der veränderliche Systemparameter kann durch ein Verhältnis zwischen einer Eingangsgröße zu einer Zustandsgröße gebildet sein, das von einem bestimmten Zustand des Systems abhängig ist. Dabei kann der Systemparameter in jedem Zustand einen anderen Wert aufweisen. Alternativ zu dem tatsächlichen Wert des Systemparameters $\rho(t)$ in jedem Zustand kann ein abschnittsweise gemittelter Wert $\rho_{Tp}(t)$ des Systemparameters $\rho(t)$ verwendet werden. Dies trägt dem Umstand Rechnung, dass bei einer zeitdiskreten, rechnergestützten Regelung eines technischen Systems eine messtechnische Abtastung der Eingangsgrößen in Abtastintervallen erfolgt. Die Schaltungen des Systems selbst erfolgen nicht synchronisiert mit der Abtastung. So können die Abtastintervalle beispielsweise bei 100 μs liegen, wohingegen das System alle 50ns schaltet. Es ist daher sinnvoll, den Systemparameter $\rho(t)$ über ein Abtastintervall oder ein ganzzahliges Vielfaches des Abtastintervalles zu mitteln und diesen gemittelten Wert $\rho_{Tp}(t)$ für die Multiplikation mit der Zustandsgröße zu verwenden, da erst nach der nächsten Abtastung neue Werte der Zustandsgrößen vorliegen, mit denen gerechnet werden kann. Gemittelt über ein Abtastintervall oder ein ganzzahliges Vielfaches desselben kann der veränderliche Systemparameter einen beliebigen Wert zwischen - 1 und 1 annehmen, d.h. es gilt: $\rho_{Tp}(t) \in [1, -1]$.

In dem Fall, dass der veränderliche Systemparameter ein funktionales Abhängigkeitsverhältnis zwischen einer Eingangsgröße zu einer Zustandsgröße beschreibt, kann vorzugsweise genau diese Zustandsgröße mit dem veränderlichen Systemparameter oder einem abschnittsweise gemittelten Wert des veränderlichen Systemparameters multipliziert werden, wobei der Regler auf diese Eingangsgröße einwirkt, d.h. das Produkt aus Systemparameter und Zustandsgröße von dieser Eingangsgröße subtrahiert.

Erfindungsgemäß kann das Verfahren zur Regelung eines schaltenden leistungselektronischen Umrichtersystems verwendet werden, das einen Umrichter mit schaltbaren Halbleiterschaltern, wenigstens eine mit einer Gleichspannungsseite des Umrichters verbundenen Kapazität C, die einen Zwischenkreis bildet, und wenigstens eine mit einer Wechselspanungsseite des Umrichters verbundenen Reihenschaltung aus Induktivität L und Widerstand R umfasst. Als Zustandsgrößen ($x_i$) können die Zwischenkreisspannung ($u_{DC}$) und der Strom ($i_L$) durch die Induktivität L und als Eingangsgröße ($u_i$) die Umrichterspannung ($u_{conv}$) an der Wechselspannungsseite verwendet werden, wobei ein erster veränderlicher Systemparameter ($\rho(t)$) durch das Aussteuerungsverhältnis gebildet wird, das das Verhältnis von Umrichterspannung ($u_{conv}$) zur Zwischenkreisspannung ($u_{DC}$) beschreibt. Zur Gewährleistung der Stabilität des Systems kann die Zwischenkreisspannung ($u_{DC}$) in dem Regler mit dem ersten veränderlichen Systemparameter ($\rho(t)$) oder dem abschnittsweise gemittelten Wert ($\rho_{Tp}(t)$) des veränderlichen Systemparameters ($\rho(t)$), sowie der Induktivitätsstrom ($i_L$) mit einer negativen Konstanten multipliziert und die Linearkombination aus diesen Produkten von der Umrichterspannung ($u_{conv}$) subtrahiert werden. In dieser Variante des erfindungsgemäßen Verfahrens umfasst die Reglermatrix eine Zeile mit zwei Elementen, wobei das erste Element ($K_1$) den veränderlichen Systemparameter ($\rho(t)$) oder dessen abschnittsweise gemittelten Wert ($\rho_{Tp}(t)$) und das zweite Element $K_2$ die negative Konstante enthält. Eingangsvektor des Reglers ist ein Vektor mit einer Spalte, der in der ersten Zeile die Zwischenkreisspannung ($u_{DC}$) und in der zweiten Spalte den Induktivitätsstrom ($i_L$) enthält. Am Ausgang des Reglers ergibt sich dadurch die Linearkombination aus den Produkten Systemparameter ($\rho(t)$, ($\rho_{Tp}(t)$)) und Zwischenkreisspannung ($u_{dc}$) sowie negative Konstante ($K_2$) und Strom ($i_L$) durch die Induktivität L.

Der Umrichter kann beispielsweise ein Vier-Quadrantensteller, Gleich- oder Wechselrichter sein, der wechselspannungsseitig eine einzige Umrichterspannung ($u_{conv}$) erzeugt oder an dem eine einzige Wechselspannung ($u_{conv}$) anliegt.

In einer bevorzugten Weiterbildung des Umrichtersystems mit n Wechselspanungsanschlüssen, an denen jeweils eine Umrichterspannung ($u_{conv1}$, $u_{conv2}$, ..., $u_{convn}$) anliegt, und mit denen jeweils eine Reihenschaltung aus Induktivität L und Widerstand R verbunden ist, können als erste Zustandsgröße ($x_i$) die Zwischenkreisspannung ($u_{DC}$), als weitere Zustandsgrößen der Strom ($i_{L1}$, $i_{L2}$, ..., $i_{Ln}$) jeder Induktivität L und als Eingangsgröße ($u_i$) die Umrichterspannungen ($u_{conv1}$, $U_{conv2}$, ..., $u_{convn}$) verwendet werden, wobei das Aussteuerungsverhältnis jeder der Umrichterspannungen ($u_{conv1}$, $U_{conv2}$, ... $u_{convn}$) zur Zwischenkreisspannung ($u_{dc}$) durch einen veränderlichen Systemparameter ($\rho_1(t)$, $\rho_2(t)$, ..., $\rho_n(t)$) gebildet ist. Zur Realisierung des Reglers kann eine Reglermatrix K der Art

$$K = \begin{pmatrix} K_{C1} & K_L & 0 & ... & 0 \\ K_{C2} & 0 & K_L & ... & 0 \\ \vdots & \vdots & \vdots & \ddots & \vdots \\ K_{Cn} & 0 & 0 & ... & K_L \end{pmatrix}$$

verwendet werden, wobei gilt:

$K_{C1} = K_C \cdot \rho_1(t)$ oder $K_{C1} = K_C \cdot \rho_{Tp1}(t)$
$K_{C2} = K_C \cdot \rho_2(t)$ oder $K_{C2} = K_C \cdot \rho_{Tp2}(t)$,
$K_{Cn} = K_C \cdot \rho_n(t)$ oder $K_{Cn} = K_C \cdot \rho_{Tpn}(t)$, und

$K_L$ eine beliebige positive Konstante, $K_C$ eine negative Konstante ist, die der Bedingung $K_C \geq - C \cdot (K_L + R)^2 / (4nL)$ genügt, und wobei $\rho_i(t)$ mit i =1, 2, bis n das Aussteuerungsverhältnis und $\rho_{Tpi}(t)$ mit i =1, 2 bis n das abschnittsweise gemittelte Aussteuerungsverhältnis zwischen der i-ten Umrichterspannung ($u_{conv1}$, $U_{conv2}$, ..., $u_{convn}$) und der Zwischenkreisspannung ($u_{DC}$) ist. Dabei wird vorausgesetzt, dass die n Umrichterspannungen orthogonal sind. Für n = 3 kann der Umrichter beispielsweise ein dreiphasiger Wechselrichter sein, der eine Drehfeldmaschine speist oder die von einer solchen Drehfeldmaschine erzeugten Energie in den Zwischenkreis speist. Die Konstante $K_L$ kann im Bereich zwischen 1 und 100 liegen. Für derartige Werte $K_L$ erfüllt $K_C$ = -1 die vorgenannte Bedingung, so dass keine weitere Multiplikation der rückgekoppelten Zwischenkreisspannung erfolgen muss.

Dem Regler kann die Zustandsgröße oder können die Zustandsgrößen in gemessener Form zugeführt werden. Alternativ kann ein Beobachter zur Ermittlung der Zustandsgrößen verwendet werden, der das System weitgehend naturgetreu mathematisch abbildet. Dies hat den Vorteil, dass auch solche Zustandsgröße für die Regelung verwendet werden können, die messtechnisch nicht oder nur schwer erfassbar sind.

Das erfindungsgemäße Verfahren kann in einem Datenverarbeitungsprogramm implementiert werden bzw. implementiert sein, das auf einem Datenträger abgespeichert oder in einem Datenverarbeitungssystem, beispielsweise einem Computer geladen sein kann.

Mit Hilfe des erfindungsgemäßen Verfahrens können zeitvariante Systeme, insbesondere physikalische Größen schaltender leistungselektronischer Umrichtersysteme mit Halbleiterschalter geregelt werden, deren Systemmatrizen unter Berücksichtigung der zeitvarianten Eigenschaften Pole aufweisen, die sich innerhalb bestimmter Grenzen beliebig verändern können und im worst-case in der rechten komplexen Halbebene liegen. Dies bedeutet, dass das System für zumindest einen Zustand, d.h. zeitweise instabil ist und nicht ohne Informationsverlust beobachtet werden kann. Im Gegensatz zum Stand der Technik werden beim Entwurf des erfindungsgemäßen Reglers die zeitvarianten Systemeigenschaften berücksichtigt sowie kompensiert und dabei Stabilität garantiert. Parameterwertgrenzen sowie konkrete Parameterwerte für den Regler können exakt vorgegeben werden. Zusätzlich wird die Dynamik des rückgekoppelten Systems erheblich verbessert. Das Verfahren kann sowohl für lineare als auch für nichtlineare Systeme verwendet werden.

Weitere Merkmale und Vorteile der Erfindung werden nachfolgend anhand eines konkreten Ausführungsbeispiels und der beigefügten Figuren erläutert. Es sei angemerkt, dass die Erfindung nicht auf dieses Beispiel beschränkt ist. Vielmehr kann die Erfindung auf beliebige, insbesondere leistungselektronische Systeme und Systemtopologien angewendet werden.

Es zeigen:

Fig. 1: Regelungstechnische Struktur eines Systems in Zustandsraummodelldarstellung mit parallel geschaltetem Luenberger-Beobachter

Fig. 2: Vereinfachte Darstellung eines elektrischen Ersatzschaltbildes eines Vier-Quadrantenstellers als zu regelndes leistungselektronisches System

Fig. 3: Vereinfachte Darstellung eines elektrischen Ersatzschaltbildes eines Umrichtersystems mit n Umrichterspannungen

Fig. 4: Pol-Nullstellen Diagramm eines nichtlinearen, zeitvarianten Systems ohne erfindungsgemäßen Regler

Fig. 5: Pol-Nullstellen Diagramm eines nichtlinearen, zeitvarianten Systems mit erfindungsgemäßen Regler

Der zentrale Gedanke des Regelungsansatzes ist die Stabilisierung der Eigenwertvariation durch Kompensation der zeitvarianten und nichtlinearen Systemeigenschaften, die bei leistungselektronischen Systemen stets auftreten. Der Regler steht in direkter Interaktion mit der physikalischen Regelstrecke, sodass nur real existierende Regelgrößen verwendet werden können. Bei vielen leistungselektronischen Anwendungsfällen können die zeitvarianten und nichtlinearen Systemeigenschaften nicht vollständig mit Hilfe der vorhandenen Eingangsgrößen kompensiert werden. Das Kernziel des erfindungsgemäßen Verfahrens ist es, die Stabilität des rückgekoppelten Systems im Zeitbereich stets zu garantieren. Dies steht im Gegensatz zu üblichen Regelungsansätzen, die eine konstante Systemmatrix für den Entwurf zu Grunde legen und damit zeitvariante und nichtlineare Systemeigenschaften vernachlässigen. Nachfolgend wird das erfindungsgemäße Verfahren allgemein für Zustandsrückführungen beschrieben. Dabei wird es auf einen Vier-Quadrantsteller angewendet.

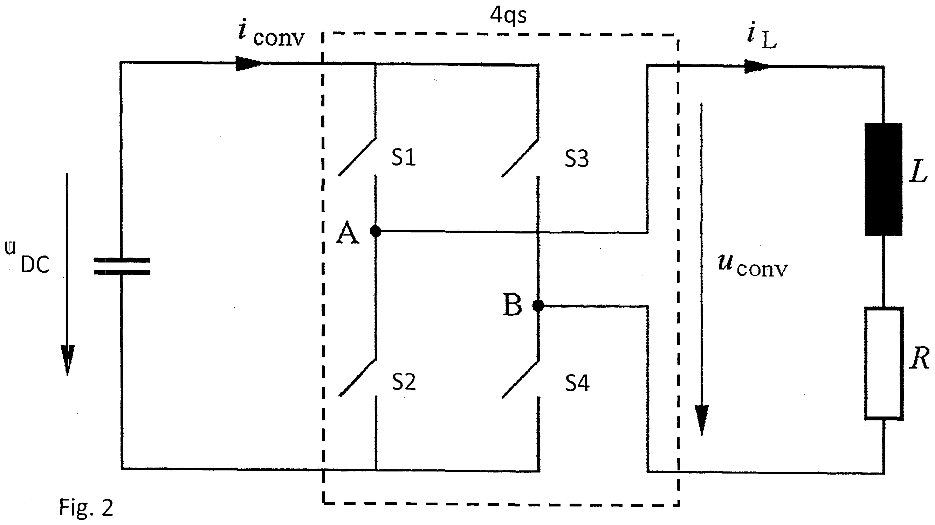

Für die Entwicklung effizienter Regelungskonzepte für leistungselektronische Systeme mit schaltenden Halbleitern, wie IGBTs (Insulated Gate Bipolar Transistor) oder IGCTs (Integrated Gate Commutated Thyristor), werden diese durch einfache Schalter nachgebildet, nachfolgend auch Ventile genannt. Auf der konzeptuellen Ebene der Regelung besteht die Möglichkeit, Schaltverzögerungen und lastabhängige Spannungsfälle entlang der Ventile zu berücksichtigen. Auf dieser Modellierungsebene dominiert der Einfluss der zeitvarianten Systemeigenschaften. Zwei Differentialgleichungssysteme werden durch die leistungselektronischen Schalter zu einem Zustandsraummodell miteinander verbunden. Durch das fortwährende aussteuerungsabhängige Umschalten der Systemzustände verändern die Eigenwerte des Systems unstetig bzw. sprunghaft ihre Lage. Dieser Effekt wird anhand des Beispiels gemäß Fig. 2 veranschaulicht.

Fig. 2 zeigt ein vereinfachtes elektrisches Ersatzschaltbild einer Reihenschaltung aus Induktivität L und Widerstand R, die über einen leistungselektronischen Umrichter 4qs mit Halbleiterschaltern S1, S2, S3, S4 mit einer Kapazität C eines Zwischenkreises verbunden sind. Der Umrichter stellt einen Vier-Quadrantsteller 4qs dar, der die Reihenschaltung aus Induktivität L und Widerstand R speist. Sind die Schalter S1 und S4 geschlossen, ergibt sich $u_{DC} = u_{conv}$ und $i_{conv} = i_L$. Sind S2 und S3 geschlossen ist $u_{DC} = - u_{conv}$ und $i_{conv} = -i_L$. Für S3 und S4 oder S1 und S2 geschlossen ergibt sich $u_{DC} = 0 = u_{conv}$ und $i_{conv} = 0 = i_L$. Somit ist der Zusammenhang zwischen Zwischenkreisspannung $u_{DC}$ und Umrichterspannung $u_{conv}$ sowie zwischen Umrichterstrom $i_{conv}$ und Strom $i_L$ durch die Induktivität L durch einen verän-

derlichen Systemparameter $\rho(t)$ beschreibbar.

Das Ersatzschaltbild kann durch Differentialgleichungen beschrieben werden:

$$C\,\frac{du_{DC}}{dt} = -\rho(t)\cdot i_L$$

$$L\,\frac{di_L}{dt} = \rho(t)\cdot u_C - R\cdot i_L$$

Dabei ist $i_L$ der durch die Induktivität L aus dem Vier-Quadratensteller 4qs herausfließende Strom, $u_{DC}$ die Spannung am kondensator C und $\rho(t)$ die Aussteuerung, d.h. das Verhältnis von Umrichterspannung $u_{conv}$ zur Zwischenkreisspannung $u_{DC}$. $\rho(t)$ wird daher nachfolgend auch Übertragungsverhältnis genannt. Durch die unterschiedlichen Schaltzustände des Vier-Quadrantenstellers 4qs werden die Aussteuerung $\rho(t)$ und damit das Differentialgleichungssystem verändert. Es gilt $\rho(t)\cdot u_C = u_{conv}$ und $\rho(t)\cdot i_L = i_{conv}$. Im Augenblick gilt $\rho(t) \in \{1; 0; -1\}$, über ein Schaltspiel gemittelt gilt $\rho_{TP}(t)\,e\,[1,-1]$. Je nachdem, wie lange ein bestimmter Systemzustand pro Zeiteinheit anliegt, kann damit $\rho(t)$ einen beliebigen Wert zwischen -1 und 1 aufweisen. Auf diese Weise kann eine im Mittel beliebige Zwischenkreisspannung $u_{DC}$ eingestellt werden.

Unter Verwendung der Differentialgleichungen kann ein Zustandsraummodell zweiter Ordnung für das System nach Fig. 2 angegeben werden:

$$\dot{x} = A\cdot x + B\cdot u$$

$$x = \begin{pmatrix} u_{DC} \\ i_L \end{pmatrix},\ u = (u_{conv})$$

$$A = \begin{pmatrix} 0 & -\dfrac{\rho(t)}{C} \\ 0 & -\dfrac{R}{L} \end{pmatrix},\ B = \begin{pmatrix} 0 \\ \dfrac{1}{L} \end{pmatrix}$$

Dabei sind die stetigen physikalischen Größen Spannung $u_{DC}$ und Strom $i_L$ an den energiespeichernden Bauelementen L und C die Zustandsgrößen des Systems, die in dem Zustandsvektor x zusammengefasst sind. $\dot{x}$ stellt die zeitliche Ableitung des Zustandsvektors dar. Eingangsgröße ist die Spannung $u_{conv}$ am Vier-Quadrantensteller 4qs. Die Systemmatrix A und die Steuermatrix B ergeben sich unmittelbar aus den oben angegebenen Gleichungen. Die Anwendung des Reglers auf ein derartiges System wird nachfolgend noch beschrieben. Zunächst wird jedoch zu Anschauungszwecken ein erweitertes System betrachtet.

In leistungselektronischen Anwendungen mit eingeprägter Zwischenkreisspannung und symmetrischer n-phasiger R-L-Last mit Gegenspannung wird üblicherweise keine Phasendarstellung, sondern eine Ersatzdarstellung mit orthogonalen Dimensionen verwendet. Bei Dreiphasensystemen werden Raumzeiger eingesetzt, die zu zwei oder drei orthogonalen Dimensionen führen, abhängig davon, ob das Nullsystem betrachtet werden muss. Für 4-Leiter-Systeme können sogenannte Hyperzeiger verwendet werden. Diese Beschreibungsform kann natürlich auf Systeme mit mehr Freiheitsgraden erweitert werden. Die Verwendung solcher orthogonaler Transformationen wie der Raumzeigertransformnation führt bei symmetrischen bzw. zyklischsymmetrischen Systemen zu einer starken Vereinfachung der Komplexität bezüglich Modellierung und Regelung. Ein solches symmetrisches n-phasiges R-L-System mit Gegenspannung steht hierbei repräsentativ für typische leistungselektronische Anwendungen wie Netze, Transformatoren, Asynchronmaschinen, Synchronmaschinen, Gleichstrommaschinen etc.

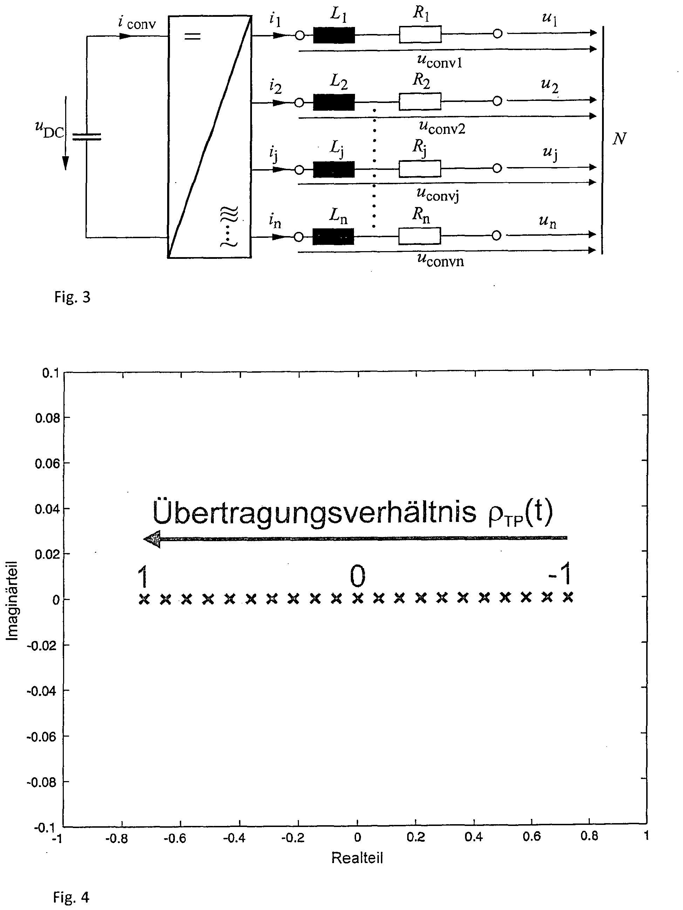

Figur 3 zeigt ein System mit 5-phasiger orthogonaler R-L-Last, das ohne Verlust der Allgemeingültigkeit für ein System mit n orthogonalen Lastdimensionen steht. In den Lastzweigen sind Spannungen $u_1$, $u_2$, ...$u_j$, ...$u_n$ angegeben, die im Falle einer n-phasigen Drehfeldmaschine die jeweils in einem Wicklungsstrang rückinduzierte Spannung repräsentieren, im Falle eines n-phasigen Netzes die jeweilige Phasenspannung repräsentieren. Die Spannungen bilden Eingangsgrößen des Systems, die für den Reglerentwurf jedoch außer Acht gelassen werden können. Die Umrichterspannungen $u_{conv,1}$, $u_{conv,2}$, ..., $u_{conv,n}$ sind in Bezug auf einen gewählten Nullpunkt N dargestellt.

Auch hier wird ein zu entwerfender Regler mit Zustandsrückführung betrachtet. Folglich sind nur die Systemgleichung und die Zustandsraummodellmatrizen A und B notwendig, welche einfach bestimmt werden können. Werden als Zustandsgrößen die Zwischenkreisspannung $u_{DC}$ und die Strangströme $i_{L,1}$, $i_{L,2}$, ..., $i_{L,n}$ sowie als Eingangsgrößen des Systems die Umrichterspannungen $u_{conv,1}$, $u_{conv,2}$ ..., $u_{conv,n}$ verwendet, ergibt sich die Systemmatrix A wie folgt, wobei für die Übertragungsverhältnisse $\rho_i(t)$ jeweils ein über eine Pulsperiode gemittelter Wert $\rho_{Tp,i}(t)$ verwendet wird:

$$A = \begin{pmatrix} 0 & -\dfrac{\rho_{Tp,1}(t)}{C} & -\dfrac{\rho_{Tp,2}(t)}{C} & -\dfrac{\rho_{Tp,3}(t)}{C} & -\dfrac{\rho_{Tp,4}(t)}{C} & -\dfrac{\rho_{Tp,5}(t)}{C} \\ 0 & -\dfrac{R}{L} & 0 & 0 & 0 & 0 \\ 0 & 0 & -\dfrac{R}{L} & 0 & 0 & 0 \\ 0 & 0 & 0 & -\dfrac{R}{L} & 0 & 0 \\ 0 & 0 & 0 & 0 & -\dfrac{R}{L} & 0 \\ 0 & 0 & 0 & 0 & 0 & -\dfrac{R}{L} \end{pmatrix}$$

wobei der Vektor x der Zustandsgrößen $x_i$ transponiert $x = (u_{dc}\ i_{L,1}\ i_{L,2}\ i_{L,3}\ i_{L,4}\ i_{L,5})^T$ lautet.

Die aktuellen Übertragungsverhältnisse $\rho_{Tp,i}(t)$ mit i = 1 bis 5 sind die einzigen Parameter, die verändert werden können. Folglich bilden die Umrichterspannungen $u_{conv,i}$ aller Dimensionen die Eingangsgrößen u (Stellgrößen). Somit ergibt sich die Steuermatrix B zu

$$B = \begin{pmatrix} 0 & 0 & 0 & 0 & 0 \\ \dfrac{1}{L} & 0 & 0 & 0 & 0 \\ 0 & \dfrac{1}{L} & 0 & 0 & 0 \\ 0 & 0 & \dfrac{1}{L} & 0 & 0 \\ 0 & 0 & 0 & \dfrac{1}{L} & 0 \\ 0 & 0 & 0 & 0 & \dfrac{1}{L} \end{pmatrix}$$

wobei der Vektor u der Eingangsgrößen $u_i$ transponiert $U = (u_{conv,1}\ u_{conv,2}\ u_{conv,3}\ u_{conv,4}\ u_{conv,5})^T$ lautet.

Alle Dimensionen der Lastseite sind orthogonal. Somit können alle Einträge $K_{i,j}$, mit i = 1 bis 5 und j = 1 bis 6, der Reglermatrix K zu Null angenommen werden, die nicht den Regelfehler des Laststromes $i_{L,n}$, mit n = 1 bis 5, eines Strangs mit der Umrichterspannung $u_{conv,i}$, mit i = 1 bis 5, desselben Strangs verbinden.

Entsprechend der vollsymmetrischen Last werden die betreffenden Regelparameter $K_L$, die auf der Diagonalen der Reglermatrix lokalisiert sind, identisch gewählt. Mit diesen Annahmen lässt sich das erfindungsgemäße Verfahren am einfachsten beschreiben. Zusätzlich wird der Regelfehler der Zwischenkreisspannung $u_{DC}$ auf die Umrichterspannungen $u_{conv,1}$, $u_{conv,2}$, ..., $u_{conv,n}$ durch die Regelungsmatrixelemente $K_{C,i}$ mit i = 1 bis 5 zurückgeführt. Die Reglermatrix ergibt sich damit zu

$$K = \begin{pmatrix} K_{C,1} & K_L & 0 & 0 & 0 & 0 \\ K_{C,2} & 0 & K_L & 0 & 0 & 0 \\ K_{C,3} & 0 & 0 & K_L & 0 & 0 \\ K_{C,4} & 0 & 0 & 0 & K_L & 0 \\ K_{C,5} & 0 & 0 & 0 & 0 & K_L \end{pmatrix}$$

Die Kombination von Systemmatrizen A, B und Regelungsmatrix K führt zu einem autonomen System. Die resultierende Systemmatrix $A_r$ des rückgekoppelten Systems kann mit dem Zusammenhang $A_r$ = A - BK berechnet werden, da sich die Eingangsgrößen des über K negativ rückgekoppelten Systems zu u = -K·x ergeben, so dass dx/dt = A x - B·K x = (A - B·K) x folgt. $A_r$ ergibt sich zu

$$A_r = A - B \cdot K$$

$$= \begin{pmatrix} 0 & -\dfrac{\rho_{Tp,1}(t)}{C} & -\dfrac{\rho_{Tp,2}(t)}{C} & -\dfrac{\rho_{Tp,3}(t)}{C} & -\dfrac{\rho_{Tp,4}(t)}{C} & -\dfrac{\rho_{Tp,5}(t)}{C} \\ -\dfrac{K_{C,1}}{L} & -\dfrac{K_L}{L} - \dfrac{R}{L} & 0 & 0 & 0 & 0 \\ -\dfrac{K_{C,2}}{L} & 0 & -\dfrac{K_L}{L} - \dfrac{R}{L} & 0 & 0 & 0 \\ -\dfrac{K_{C,3}}{L} & 0 & 0 & -\dfrac{K_L}{L} - \dfrac{R}{L} & 0 & 0 \\ -\dfrac{K_{C,4}}{L} & 0 & 0 & 0 & -\dfrac{K_L}{L} - \dfrac{R}{L} & 0 \\ -\dfrac{K_{C,5}}{L} & 0 & 0 & 0 & 0 & -\dfrac{K_L}{L} - \dfrac{R}{L} \end{pmatrix}$$

Das zentrale Ziel des erfindungsgemäßen Reglers ist es, die Stabilität des gesamten Systems für alle möglichen Kombinationen aller $\rho_{Tp,i}(t)$ zu gewährleisten. Um die Stabilität analytisch zu untersuchen, ist das charakteristische Polynom zu berechnen

$$0 = \det(\lambda I - A_r)$$

$$0 = det \begin{pmatrix} \lambda & \dfrac{\rho_{Tp,1}(t)}{C} & \dfrac{\rho_{Tp,2}(t)}{C} & \dfrac{\rho_{Tp,3}(t)}{C} & \dfrac{\rho_{Tp,4}(t)}{C} & \dfrac{\rho_{Tp,5}(t)}{C} \\ \dfrac{K_{C,1}}{L} & \dfrac{K_L+R}{L}+\lambda & 0 & 0 & 0 & 0 \\ \dfrac{K_{C,2}}{L} & 0 & \dfrac{K_L+R}{L}+\lambda & 0 & 0 & 0 \\ \dfrac{K_{C,3}}{L} & 0 & 0 & \dfrac{K_L+R}{L}+\lambda & 0 & 0 \\ \dfrac{K_{C,4}}{L} & 0 & 0 & 0 & \dfrac{K_L+R}{L}+\lambda & 0 \\ \dfrac{K_{C,5}}{L} & 0 & 0 & 0 & 0 & \dfrac{K_L+R}{L}+\lambda \end{pmatrix}$$

$$0 = a_6\lambda^6 + a_5\lambda^5 + a_4\lambda^4 + a_3\lambda^3 + a_2\lambda^2 + a_1\lambda + a_0$$

Nachfolgend ist nur der Koeffizient $a_0$ angegeben, um den Einfluss der Regelungsparameter auf die Stabilität des Systems zu veranschaulichen. Entsprechend kann die Abhängigkeit aller anderen $K_{C,i}$ und $K_L$ mit Hilfe der anderen Koeffizienten-Bedingungen (alle Koeffizienten müssen dasselbe Vorzeichen besitzen) des charakteristischen Polynoms sowie der sogenannten Hurwitz-Determinanten berechnet werden.

$$\begin{aligned}
a_0 = {} & -\frac{K_{C,1}\,K_L{}^4\,\rho_{Tp,1}(t)}{C\,L^5} - \frac{4\,K_{C,1}\,K_L{}^3\cdot R\,\rho_{Tp,1}(t)}{C\,L^5} - \frac{6\,K_{C,1}\,K_L{}^2\,R^2\,\rho_{Tp,1}(t)}{C\,L^5} \\[4pt]
& -\frac{4\,K_{C,1}\,K_L\,R^3\,\rho_{Tp,1}(t)}{C\,L^5} - \frac{K_{C,1}\,R^4\,\rho_{Tp,1}(t)}{C\,L^5} - \frac{K_{C,2}\,K_L{}^4\,\rho_{Tp,2}(t)}{C\,L^5} \\[4pt]
& -\frac{4\,K_{C,2}\,K_L{}^3\,R\,\rho_{Tp,2}(t)}{C\,L^5} - \frac{6\,K_{C,2}\,K_L{}^2\,R^2\,\rho_{Tp,2}(t)}{C\,L^5} - \frac{4\,K_{C,2}\,K_L\,R^3\,\rho_{Tp,2}(t)}{C\,L^5} \\[4pt]
& -\frac{K_{C,2}\,R^4\,\rho_{Tp,2}(t)}{C\,L^5} - \frac{K_{C,3}\,K_L{}^4\,\rho_{Tp,3}(t)}{C\,L^5} - \frac{4\,K_{C,3}\,K_L{}^3\,R\,\rho_{Tp,3}(t)}{C\,L^5} \\[4pt]
& -\frac{6\,K_{C,3}\,K_L{}^2\,R^2\,\rho_{Tp,3}(t)}{C\,L^5} - \frac{4\,K_{C,3}\,K_L\,R^3\,\rho_{Tp,3}(t)}{C\,L^5} - \frac{K_{C,3}\,R^4\,\rho_{Tp,3}(t)}{C\,L^5} \\[4pt]
& -\frac{K_{C,4}\,K_L{}^4\,\rho_{Tp,4}(t)}{C\,L^5} - \frac{4\,K_{C,4}\,K_L{}^3\,R\,\rho_{Tp,4}(t)}{C\,L^5} - \frac{6\,K_{C,4}\,K_L{}^2\,R^2\,\rho_{Tp,4}(t)}{C\,L^5} \\[4pt]
& -\frac{4\,K_{C,4}\,K_L\,R^3\,\rho_{Tp,4}(t)}{C\,L^5} - \frac{K_{C,4}\,R^4\,\rho_{Tp,4}(t)}{C\,L^5} - \frac{K_{C,5}\,K_L{}^4\,\rho_{Tp,5}(t)}{C\,L^5} \\[4pt]
& -\frac{4\,K_{C,5}\,K_L{}^3\,R\,\rho_{Tp,5}(t)}{C\,L^5} - \frac{6\,K_{C,5}\,K_L{}^2\,R^2\,\rho_{Tp,5}(t)}{C\,L^5} - \frac{4\,K_{C,5}\,K_L\,R^3\,\rho_{Tp,5}(t)}{C\,L^5} \\[4pt]
& -\frac{K_{C,5}\,R^4\,\rho_{Tp,5}(t)}{C\,L^5}
\end{aligned}$$

Um Stabilität für jede mögliche Kombination aller $\rho_{Tp,i}(t)$ zu erreichen, werden die Reglermatrixeinträge $K_{C,i}$ zu $K_{C,i} = K_C \cdot \rho_{Tp,i}(t)$ mit i = 1 bis 5 gewählt, wobei $K_C$ eine Konstante ist. Werden diese Informationen berücksichtigt, ändern sich die dargestellten Koeffizienten zu

$$a_0 = -\frac{K_C\, K_L{}^4\, \rho_{Tp,1}(t)^2}{C\, L^5} - \frac{4\, K_C\, K_L{}^3\, R\, \rho_{Tp,1}(t)^2}{C\, L^5} - \frac{6\, K_C\, K_L{}^2\, R^2\, \rho_{Tp,1}(t)^2}{C\, L^5}$$

$$- \frac{4\, K_C\, K_L\, R^3\, \rho_{Tp,1}(t)^2}{C\, L^5} - \frac{K_C\, R^4\, \rho_{Tp,1}(t)^2}{C\, L^5} - \frac{K_C\, K_L{}^4\, \rho_{Tp,2}(t)^2}{C\, L^5}$$

$$- \frac{4\, K_C\, K_L{}^3\, R\, \rho_{Tp,2}(t)^2}{C\, L^5} - \frac{6\, K_C\, K_L{}^2\, R^2\, \rho_{Tp,2}(t)^2}{C\, L^5} - \frac{4\, K_C\, K_L\, R^3\, \rho_{Tp,2}(t)^2}{C\, L^5}$$

$$- \frac{K_C\, R^4\, \rho_{Tp,2}(t)^2}{C\, L^5} - \frac{K_C\, K_L{}^4\, \rho_{Tp,3}(t)^2}{C\, L^5} - \frac{4\, K_C\, K_L{}^3\, R\, \rho_{Tp,3}(t)^2}{C\, L^5}$$

$$- \frac{6\, K_C\, K_L{}^2\, R^2\, \rho_{Tp,3}(t)^2}{C\, L^5} - \frac{4\, K_C\, K_L\, R^3\, \rho_{Tp,3}(t)^2}{C\, L^5} - \frac{K_C\, R^4\, \rho_{Tp,3}(t)^2}{C\, L^5}$$

$$- \frac{K_C\, K_L{}^4\, \rho_{Tp,4}(t)^2}{C\, L^5} - \frac{4\, K_C\, K_L{}^3\, R\, \rho_{Tp,4}(t)^2}{C\, L^5} - \frac{6\, K_C\, K_L{}^2\, R^2\, \rho_{Tp,4}(t)^2}{C\, L^5}$$

$$- \frac{4\, K_C\, K_L\, R^3\, \rho_{Tp,4}(t)^2}{C\, L^5} - \frac{K_C\, R^4\, \rho_{Tp,4}(t)^2}{C\, L^5} - \frac{K_C\, K_L{}^4\, \rho_{Tp,5}(t)^2}{C\, L^5}$$

$$- \frac{4\, K_C\, K_L{}^3\, R\, \rho_{Tp,5}(t)^2}{C\, L^5} - \frac{6\, K_C\, K_L{}^2\, R^2\, \rho_{Tp,5}(t)^2}{C\, L^5} - \frac{4\, K_C\, K_L\, R^3\, \rho_{Tp,5}(t)^2}{C\, L^5}$$

$$- \frac{K_C\, R^4\, \rho_{Tp,5}(t)^2}{C\, L^5}$$

Hieraus ergeben sich die Vorzeichen der einzelnen Terme, welche - aufgrund der quadratischen Struktur der Übertragungsverhältnisse - unabhängig von $\rho_{Tp,i}(t)$ sind Wird $K_L > 0$ gewählt, liegt bei allen Termen ein negatives Vorzeichen vor, so dass mit $K_C < 0$ Koeffizient $a_0$ positive wäre. Bei genauer Berechnung der fünf Koeffizienten des charakteristischen Polynoms ergibt sich die genaue Stabilitätsbedingung für den Regelungsmatrixeintrag $K_L$.

$$a_5 = \frac{5 K_L}{L} + \frac{5 R}{L}$$

$$K_L > -R$$

Die Einschränkung für die Reglermatrixelemente $K_L$ führen zu den folgenden Eigenwerten des rückgekoppelten Systems:

$$\lambda_1 = \frac{-K_L - R}{L}$$

$$\lambda_2 = \frac{-K_L - R}{L}$$

$$\lambda_3 = \frac{-K_L - R}{L}$$

$$\lambda_4 = \frac{-K_L - R}{L}$$

$$\lambda_{5,6} = \frac{-C\,K_L - C\,R}{2\,C\,L} \pm \frac{\sqrt{(-C\,K_L - C\,R)^2 + E}}{2\,C\,L}$$

$$E = 4\,C\,L\,K_C\,\left(\rho_{Tp,1}(t)^2 + \rho_{Tp,2}(t)^2 + \rho_{Tp,3}(t)^2 + \rho_{Tp,4}(t)^2 + \rho_{Tp,5}(t)^2\right)$$

Die Eigenwerte $\lambda_1$ bis $\lambda_4$ sind reell und liegen für $K_L > -R$ in der negativen komplexen Halbebene, womit ein stabiles Verhalten für diese Eigenwerte garantiert ist. Eine Schwingung von Systemgrößen - welche mit komplexen Eigenwerten $\lambda_5$ und $\lambda_6$ verbunden wäre - sollte vermieden werden. Um asymptotisches Verhalten zu erzielen, muss der Term unter der Wurzel ein positives Vorzeichen besitzen. Ein Einsetzen des maximal für E auftretenden Wertes - dieser tritt genau dann auf, wenn die Übertragungsverhältnisse $\rho_{Tp,i} = \pm 1$ sind - führt zu folgendem Term unter der Wurzel:

$$E = 20 \cdot C \cdot K_C \cdot L + (-C \cdot R - C \cdot K_L)^2.$$

Wird Kc als

$$K_C = \frac{-C(R + K_L)^2}{20L}$$

gewählt, sind die Eigenwerte $\lambda_5$ und $\lambda_6$ stets reell und unabhängig von den Übertragungsverhältnissen. Das erfindungsgemäße Konzept bezieht sich vor allem auf die Miteinbeziehung von $\rho_i(t)$ in die Reglermatrix. Es können trotz der oben eingeführten Beschränkungen auch Werte $K_C \neq \dfrac{-C(R+K_L)^2}{20L}$ zu stabilen Lösungen führen.

Das erfindungsgemäße Verfahren wird nunmehr auf das in Fig. 2 gezeigte Umrichtersystem angewendet, zu dem oben bereits das Zustandsraummodell aufgestellt worden ist. Das aktuelle Übertragungsverhältnis $\rho_{Tp}(t)$ ist der einzige Parameter, der verändert werden kann. Somit ist das Übertragungsverhältnis multipliziert mit der Zwischenkreisspannung, d.h. also die aktuelle Umrichterspannung $u_{conv} = \rho_{Tp}(t) \cdot u_{DC}$, die einzige Stellgröße des Zustandsreglers.

Die Kombination der Systemmatrizen A, B und der Reglermatrix K ergibt ein autonomes System. Mit der Vorschrift A - B·K kann die resultierende Systemmatrix Ar berechnet werden. In diesem Beispiel hat die Reglermatrix K nur die zwei Elemente K1 und K2, da in Abhängigkeit von den beiden Zustandsgrößen Induktivitätsstrom $i_L$ und Kapazitätsspannung $u_{DC}$ nur eine Stellgröße, nämlich die Umrichterspannung $u_{conv}$ beeinflusst werden kann.

$$\mathbf{A}_r = \mathbf{A} - \mathbf{B}_r \cdot \mathbf{K}$$

$$= \begin{pmatrix} 0 & -\dfrac{\rho_{Tp}(t)}{C} \\[2ex] -\dfrac{K_1}{L} & \dfrac{-K_2 - R}{L} \end{pmatrix}$$

Um das Systemverhaltung zu untersuchen, wird das charakteristische Polynom berechnet.

$$0 = det(\lambda \mathbf{I} - \mathbf{A}_r)$$

$$0 = det \begin{pmatrix} \lambda & \dfrac{\rho_{Tp}(t)}{C} \\ \dfrac{K_1}{L} & \lambda + \dfrac{K_2 + R}{L} \end{pmatrix}$$

$$0 = \lambda^2 + \frac{K_2 + R}{L}\lambda - \frac{K_1 \rho_{Tp}(t)}{LC}$$

$$0 = a_2 \lambda^2 + a_1 \lambda + a_0$$

mit

$$a_2 = 1$$

$$a_1 = \frac{K_2 + R}{L}$$

$$a_0 = -\frac{K_1 \rho_{Tp}(t)}{LC}$$

Die Stabilität des rückgekoppelten Systems kann mit Hilfe des sogenannten Hurwitzkriteriums nachgewiesen werden. Nach diesem ist die Gleichheit der Koeffizientenvorzeichen eine Stabilitätsbedingung. Da $a_2$ größer null ist, müssen auch die übrigen Koeffizienten größer null sein. Dies ist der Fall für $K_2 > -R$ und $K_1\,\rho_{Tp}(t) < 0$.

Um die Koeffizientenbedingung für $a_0$ zu erfüllen, wird das Element K1 der Reglermatrix zu $K_{1,const}\cdot\rho_{Tp}(t)$ mit K1 ,const < 0 gewählt. Somit hat der zeitvariante Parameter $\rho_{Tp}(t)$ keine Möglichkeit, eine Instabilität zu verursachen. Basierend auf dem charakteristischen Polynom, kann die Hurzwitzmatrix aufgestellt werden:

$$\mathbf{H} = \begin{pmatrix} a_1 & a_3 & a_5 & \cdots \\ a_0 & a_2 & a_4 & \cdots \\ 0 & a_1 & a_3 & \cdots \\ 0 & 0 & a_2 & \cdots \\ \vdots & \vdots & \vdots & \vdots \end{pmatrix}$$

Aufgrund der zweidimensionalen Systemordnung müssen die ersten beiden Unterdeterminanten D1 und D2 positiv sein. Da die erste Unterdeterminante D1 dem Koeffizienten a1 des charakteristischen Polynoms entspricht, müssen keine weiteren Bedingungen berücksichtigt werden. Ebenfalls generiert die Unterdeterminante D2 keine neuen Bedingungen, da $a_3 = 0$ und $a_2 = 1$ gilt. Folglich entspricht auch Unterdeterminante D2 dem Koeffizienten $a_1$ so dass

die beiden Bedingungen, die aus den Koeffizientenanforderungen für $a_0$ und $a_1$ bestimmt wurden, zur Beurteilung der Systemstabilität ausreichen. Zusätzlich werden die Eigenwerte des rückgekoppelten Systems so gewählt, dass sich ein aperiodisches Systemverhalten ergibt. Um imaginäre Anteile zu unterbinden, werden die Eigenwerte (Nullstellen des charakteristischen Polynoms) des rückgekoppelten Systems berechnet.

$$0 = \lambda^2 + \frac{K_2 + R}{L}\lambda - \frac{\rho_{Tp}(t)K_1}{LC}$$

$$\lambda_{1,2} = -\frac{K_2 + R}{2L} \pm \sqrt{\left(\frac{K_2 + R}{2L}\right)^2 + \frac{\rho_{Tp}(t)K_1}{LC}}$$

Um ein aperiodisches Verhalten des Systems zu erreichen, muss die Diskriminante positiv gewählt werden, d.h. der Wurzelausdruck größer null sein:

$$\left(\frac{K_2+R}{2L}\right)^2 + \frac{\rho_{Tp}(t)K_1}{LC} > 0 \Leftrightarrow (K_2 + R)^2 + \frac{4L\rho_{Tp}(t)K_1}{C} > 0$$

Ausgehend von dieser Bedingung und der Substitution $K_1 = K_{1,const} \cdot \rho_{Tp}(t)$ kann eine untere Grenze für den Regelungsparameter $K_{1,const}$ berechnet werden. Dieser hängt vom gewählten Regelungsparameter K2 und des Systemparameters ab.

$$K_{1,const} > -\frac{C(K_2 + R)^2}{4L\rho_{Tp}^2(t)}$$

Um eine robuste Regelungsparametrierung zu erhalten, wird der maximale Wert für das Übertragungsverhältnis $\rho_{TP}(t) = \rho_{TP,max} = 1$ angenommen. Wird dieser "worst case" berücksichtigt, vereinfachen sich die Bedingungen für die Beziehung zwischen den zwei Regelungsparametern K1 und K2 und es ergibt sich die untere Grenze für $K_{1,const}$ :

$$K_{1,const} > -\frac{C(K_2 + R)^2}{4L}$$

Obere Grenze für $K_{1,const}$ ist weiterhin $K_{1,const} < 0$. Somit ergibt sich die Reglermatrix K als vollständiges Regelungsgesetz zu K = (K1,const · $\rho_{Tp}$(t) K2).

Die Wirkung der erfindungsgemäßen Regelung kann besonders anschaulich mit Hilfe eines Pol-Nullstellen-Bildes verdeutlicht werden. Für den Vergleich wurden die Eigenwerte von zwei rückgekoppelten Systemen berechnet, wobei das eine mit einem normalen Zustandsregler und das andere mit einem Zustandsregler gemäß der vorliegenden Erfindung geregelt wird. Bei der Darstellung wurde das Übertragungsverhältnis $\rho_{Tp}$(t) im Intervall [-1, 1] variiert. Die Skalierung der beiden Pol-Nullstellen-Bilder wurde so gewählt, dass das Verhalten des dominanten Eigenwertes besonders gut erkennbar ist.

Unter Berücksichtigung des bekannten LQ-basierten Reglerentwurfs für die gemittelte Systemmatrix Ä mit $\rho_{Tp}$(t) = $\overline{\rho_{Tp}}$ konstant, können die konstanten Reglerparameter beispielsweise zu K = (-0,1; 15) gewählt werden, womit sich große Eigenwertvariationen ergeben, siehe Figur 4. Der Realteil der Eigenwerte kann sogar positiv und das rückgekoppelte System somit instabil sein - obwohl der Reglerentwurf an sich ein robustes und stabiles Systemverhalten garantiert. Dieser Unterschied zwischen Entwurf und realem Systemverhalten wird durch das zeitvariante Systemverhalten verursacht, das nicht während des normalen Entwurfsprozesses berücksichtigt werden kann.

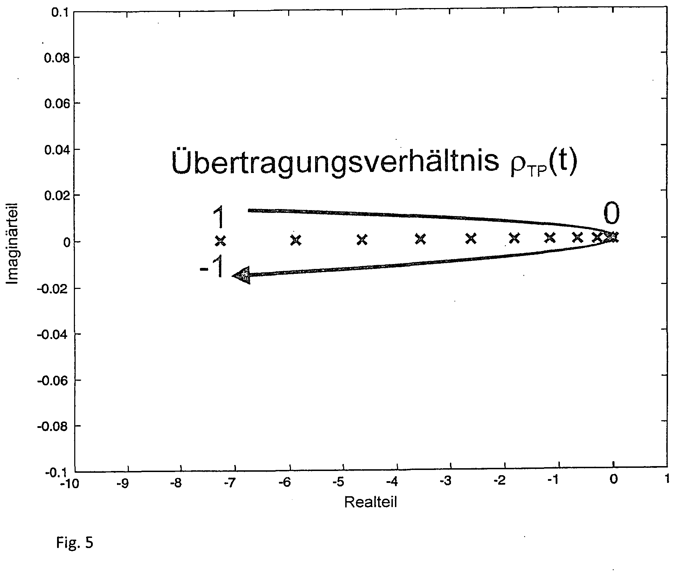

Die Anwendung der erfindungsgemäßen Regelung führt zu einer Reglermatrix K = (-$\rho_{Tp}$(t); 15). Dies garantiert, dass alle Eigenwerte in der linken komplexen Halbebene liegen und das System damit stabil ist, wie Figur 5 zeigt. Folglich ist das rückgekoppelte System für jedes $\rho_{TP}(t)$ stabil.

**Patentansprüche**

1.  Verfahren zur Regelung eines schaltenden leistungselektronischen Umrichtersystems (1) mit Halbleiterschaltern, das durch ein Differenzialgleichungssystem in der Form eines Zustandsraummodells gemäß $dx/dt = A\,x(t) + B\,u(t)$ beschreibbar ist, bei dem $x(t)$ ein Vektor mit einer oder mehreren Zustandsgrößen $(x_i)$, A die Systemmatrix, B die Steuermatrix und $u(t)$ ein Vektor mit wenigstens einer Eingangsgröße $(u_i)$ des Systems ist, wobei zumindest eine der Zustandsgrößen $(x_i)$ multiplikativ mit einem zeitvarianten veränderlichen Systemparameter $(\rho(t))$ verknüpft ist und wobei zumindest eine der Zustandsgrößen $(x_i)$ oder zumindest eine der Ausgangsgrößen $(y_i)$ über einen Regler (2) mit einer Reglermatrix K auf wenigstens eine der Eingangsgrößen $(u_i)$ negativ rückgekoppelt ist, **dadurch gekennzeichnet, dass** zumindest eine der über den Regler (2) rückgekoppelten Zustandsgrößen $(x_i)$ oder Ausgangsgrößen $(y_i)$ mit dem in einem Element der Reglermatrix K enthaltenen veränderlichen Systemparameter $(\rho(t))$ oder einem abschnittsweise gemittelten Wert $(\rho_{Tp}(t))$ des veränderlichen Systemparameters $(\rho(t))$ unter Beibehaltung der zeitlichen Varianz der resultierenden Systemmatrix $(A_r)$ des rückgekoppelten Gesamtsystems derart multipliziert wird, dass die Vorzeichen der den veränderlichen Systemparameter $(\rho(t))$ enthaltenden Eigenwerte $(\lambda_i)$ der resultierenden Systemmatrix $(A_r)$ unabhängig vom Vorzeichen des veränderlichen Systemparameters $(\rho(t))$ werden.

2.  Verfahren nach Anspruch 1, **dadurch gekennzeichnet, dass** diejenige Zustandsgröße $(x_i)$ mit dem veränderlichen Systemparameter $(\rho(t))$ oder einem abschnittsweise gemittelten Wert $(\rho_{Tp}(t))$ des veränderlichen Systemparameters $(\rho(t))$ multipliziert wird, die über den veränderlichen Systemparameter $(\rho(t))$ eine funktionale Abhängigkeit von einer der Eingangsgrößen $(u_i)$ des Systems (1) besitzt, wobei der Regler auf diese Eingangsgröße $(u_i)$ einwirkt.

3.  Verfahren nach einem der vorherigen Ansprüche zur Regelung eines schaltenden leistungselektronischen Umrichtersystems, umfassend einen Umrichter mit schaltbaren Halbleiterschaltern, wenigstens eine mit einer Gleichspannungsseite des Umrichters verbundene Kapazität C, die einen Zwischenkreis bildet, und wenigstens eine mit einer Wechselspanungsseite des Umrichters verbundenen Reihenschaltung aus Induktivität L und Widerstand R, **dadurch gekennzeichnet, dass** als Zustandsgrößen $(x_i)$ die Zwischenkreisspannung $(u_{DC})$ und der Strom $(i_L)$ durch die Induktivität L und als Eingangsgröße $(u_i)$ die Umrichterspannung $(u_{conv})$ an der Wechselspannungsseite verwendet werden, wobei ein erster veränderlicher Systemparameter $(\rho(t))$ oder abschnittsweise gemittelter Wert $(\rho_{Tp}(t))$ des veränderlichen Systemparameters $(\rho(t))$ durch das Aussteuerungsverhältnis gebildet wird, das das Verhältnis von Umrichterspannung $(u_{conv})$ zur Zwischenkreisspannung $(u_{DC})$ beschreibt, und **dass** die Zwischenkreisspannung $(u_{DC})$ in dem Regler mit dem ersten veränderlichen Systemparameter $(\rho(t))$ oder dem abschnittsweise gemittelten Wert $(\rho_{Tp}(t))$ des veränderlichen Systemparameters $(\rho(t))$, und der Strom $(i_L)$ durch die Induktivität L mit einer negativen Konstante multipliziert und die Linearkombination aus diesen Produkten von der Umrichterspannung $(u_{conv})$ subtrahiert wird.

4.  Verfahren nach Anspruch 3 zur Regelung eines schaltenden leistungselektronischen Umrichtersystems mit n Wechselspanungsanschlüssen, an denen jeweils eine Umrichterspannung $(u_{conv1}, U_{conv2}, ...., u_{convn})$ anliegt, und mit denen jeweils eine Reihenschaltung aus Induktivität L und Widerstand R verbunden ist, **dadurch gekennzeichnet, dass** als erste Zustandsgröße $(x_i)$ die Zwischenkreisspannung $(u_{DC})$, als weitere Zustandsgrößen der Strom $(i_{L1}, i_{L2}, ..., i_{Ln})$ jeder Induktivität L und als Eingangsgröße $(u_i)$ die Umrichterspannung $(u_{conv1}, u_{conv2}, ..., u_{convn})$ verwendet werden, wobei das Aussteuerungsverhältnis jeder der Umrichterspannung $(u_{conv1}, u_{conv2}, ... u_{convn})$ zu der Zwischenkreisspannung $(u_{DC})$ durch einen veränderlichen Systemparameter $(\rho_1(t), \rho_2(t), ..., \rho_n(t))$ gebildet ist, und dass ein Regler (2) mit einer Reglermatrix K der Art

$$K = \begin{pmatrix} K_{C1} & K_L & 0 & ... & 0 \\ K_{C2} & 0 & K_L & ... & 0 \\ \vdots & \vdots & \vdots & \ddots & \vdots \\ K_{Cn} & 0 & 0 & ... & K_L \end{pmatrix}$$

verwendet wird, wobei gilt:

$K_{C1} = K_C \cdot \rho_1(t)$ oder $K_{C1} = K_C \cdot \rho_{TP1}(t)$

$K_{C2} = K_C \cdot \rho_2(t)$ oder $K_{C2} = K_C \cdot \rho_{TP2}(t)$,
$K_{Cn} = K_C \cdot \rho_n(t)$ oder $K_{Cn} = K_C \cdot \rho_{TPn}(t)$, und

$K_L$ eine beliebige positive Konstante, Kc eine negative Konstante ist, die der Bedingung $K_C \geq -C \cdot (K_L + R)^2/(4 \cdot n \cdot L)$ genügt, und wobei $\rho_i(t)$ mit i =1 bis n das Aussteuerungsverhältnis und $\rho_{Tpi}(t)$ mit i =1 bis n das abschnittsweise gemittelte Aussteuerungsverhältnis zwischen der i-ten Umrichterspannung ($u_{conv1}$, $u_{conv2}$, ..., $u_{convn}$) und der Zwischenkreisspannung ($u_{DC}$) ist.

5. Verfahren nach einem der vorherigen Ansprüche, **dadurch gekennzeichnet, dass** der gemittelte Wert ($\rho_{Tp}(t)$) dem über eine Pulsperiode gemittelten veränderlichen Systemparameter ($\rho(t)$) entspricht.

6. Verfahren nach Anspruch 4 oder 5, **dadurch gekennzeichnet, dass** die Konstante $K_L$ im Bereich zwischen 0,1 und 100 liegt.

7. Verfahren nach Anspruch 4 oder 5, **dadurch gekennzeichnet, dass** die Konstante Kc den Wert -1 besitzt.

8. Datenverarbeitungsprogramm zur Ausführung des Verfahrens nach einem der Ansprüche 1 bis 7.

9. Datenträger mit einem Datenverarbeitungsprogramm nach Anspruch 8.

10. Datenverarbeitungssystem, auf dem ein Datenverarbeitungsprogramm nach Anspruch 8 geladen ist.

**Claims**

1. Method for feedback control of a switching power electronic converter system (1) with semiconductor switches, which is describable by a system of differential equations in the form of a state space model according to dx/dt = A x(t) + B u(t), where x(t) is a vector with one or more state variables ($x_i$), A is the system matrix, B is the control matrix and u(t) is a vector having at least one input variable ($u_i$) of the system, wherein at least one of the state variables ($x_i$) is multiplicatively linked to a time-varying variable system parameter ($\rho(t)$) and wherein at least one of the state variables ($x_i$) or at least one of the output variables ($y_i$) is fed with negative feedback to at least one of the input variables ($u_i$) via a regulator (2) with a regulator matrix K, **characterized in that** at least one of the state variables ($x_i$) or output variables ($y_i$) coupled back by the regulator (2) is multiplied by the variable system parameter ($\rho(t)$) contained in an element of the regulator matrix K or by a value ($\rho_{TP}(t)$), averaged in portions, of the variable system parameter ($\rho(t)$) while maintaining the time variance of the resultant system matrix ($A_r$) of the fed-back overall system in such a way that the signs of the eigenvalues ($\lambda_i$), containing the variable system parameter ($\rho(t)$), of the resultant system matrix ($A_r$) become independent of the sign of the variable system parameter ($\rho(t)$).

2. Method according to Claim 1, **characterized in that** the state variable ($x_i$) that has a functional dependence on one of the input variables ($u_i$) of the system (1) over the variable system parameter ($\rho(t)$) is multiplied by the variable system parameter ($\rho(t)$) or a value ($\rho_{TP}(t)$), averaged in portions, of the variable system parameter ($\rho(t)$), wherein the regulator acts on this input variable ($u_i$).

3. Method according to any one of the preceding claims for feedback control of a switching power electronic converter system, comprising a converter with switchable semiconductor switches, at least one capacitor C connected to a DC side of the converter, said capacitor forming an intermediate circuit, and at least one series connection of inductor L and resistor R connected to an AC side of the converter, **characterized in that** the intermediate circuit voltage ($u_{DC}$) and the current ($i_L$) through the inductor L are used as state variables ($x_i$) and the converter voltage ($u_{conv}$) on the AC side is used as an input variable ($u_i$) , wherein a first variable system parameter ($\rho(t)$) or value ($\rho_{TP}(t)$), averaged in portions, of the variable system parameter ($\rho(t)$) is formed by the control ratio, which describes the ratio of converter voltage ($u_{conv}$) to intermediate circuit voltage ($u_{DC}$), and **in that** the intermediate circuit voltage ($u_{DC}$) is multiplied in the regulator by the first variable system parameter ($\rho(t)$) or the value ($\rho_{TP}(t)$), averaged in portions, of the variable system parameter ($\rho(t)$) and the current ($i_L$) through the inductor L is multiplied by a negative constant and the linear combination of these products is subtracted from the converter voltage ($u_{conv}$).

4. Method according to Claim 3 for feedback control of a switching power electronic converter system with n AC voltage connectors, a converter voltage ($u_{conv1}$, $u_{conv2}$, ..., $u_{convn}$) being present in each case, with a series connection of an inductor L and resistor R being connected thereto in each case, **characterized in that** the intermediate circuit voltage ($u_{DC}$) is used as first state variable ($x_i$), the current ($i_{L1}$, $i_{L2}$, ..., $i_{Ln}$) of each inductor L is used as further state variables and the converter voltage ($u_{conv1}$, $u_{conv2}$, ..., $u_{convn}$) is used as input variable ($u_i$), wherein the control ratio of each of the converter voltages ($u_{conv1}$, $u_{conv2}$, ..., $u_{convn}$) to the intermediate circuit voltage ($u_{DC}$) is formed by a variable system parameter ($\rho_1(t)$, $\rho_2(t)$, ..., $\rho_n(t)$), and **in that** use is made of a regulator (2) with a regulator matrix K of the type

$$K = \begin{pmatrix} K_{C1} & K_L & 0 & \cdots & 0 \\ K_{C2} & 0 & K_L & \cdots & 0 \\ \vdots & \vdots & \vdots & \ddots & \vdots \\ K_{Cn} & 0 & 0 & \cdots & K_L \end{pmatrix},$$

where the following applies:

$K_{C1} = K_C \cdot \rho_1(t)$ or $K_{C1} = K_C \cdot \rho_{TP1}(t)$,
$K_{C2} = K_C \cdot \rho_2(t)$ or $K_{C2} = K_C \cdot \rho_{TP2}(t)$,
$K_{Cn} = K_C \cdot \rho_n(t)$ or $K_{Cn} = K_C \cdot \rho_{TPn}(t)$, and

$K_L$ is any positive constant, $K_C$ is a negative constant which satisfies the condition $K_C \geq -C \cdot (K_L+R)^2/(4 \cdot n \cdot L)$, and where $\rho_i(t)$ with i = 1 to n is the control ratio and $\rho_{TPi}(t)$ with i = 1 to n is the control ratio, averaged in portions, between the i-th converter voltage ($u_{conv1}$, $U_{conv2}$, ..., $u_{convn}$) and the intermediate circuit voltage ($u_{DC}$).

5. Method according to any one of the preceding claims, **characterized in that** the averaged value ($\rho_{TP}(t)$) corresponds to the variable system parameter ($\rho(t)$) averaged over a pulse period.

6. Method according to Claim 4 or 5, **characterized in that** the constant $K_L$ lies in the range between 0.1 and 100.

7. Method according to Claim 4 or 5, **characterized in that** the constant $K_C$ has the value -1.

8. Data processing program for implementing the method according to any one of Claims 1 to 7.

9. Data medium having a data processing program according to Claim 8.

10. Data processing system, on which a data processing program according to Claim 8 is loaded.

**Revendications**

1. Procédé de régulation d'un système de convertisseur (1) électronique de puissance de commutation (1) avec des commutateurs à semi-conducteurs, qui peut être décrit par un système d'équations différentielles sous la forme d'un modèle d'espace d'état selon dx/dt = A x(t) + B u(t), pour lequel x(t) est un vecteur avec une ou plusieurs valeurs d'état ($x_i$), A la matrice système, B la matrice de commande et u(t) un vecteur avec au moins une valeur d'entrée ($u_i$) du système, au moins une des valeurs d'état ($x_i$) étant liée de façon multiplicative à un paramètre du système variable variant dans le temps ($\rho(t)$) et au moins une des valeurs d'état ($x_i$) ou au moins une des valeurs de sortie ($y_i$) étant rétrocouplée négativement par le biais d'un régulateur (2) avec une matrice de régulateur K à au moins une des valeurs d'entrée ($u_i$), **caractérisé en ce qu'**au moins une des valeurs d'état ($x_i$) ou valeurs de sortie ($y_i$) rétrocouplées par le régulateur (2) est multipliée par le paramètre de système variable ($\rho(t)$) contenu dans un élément de la matrice de régulateur K ou une valeur moyennée par sections ($\rho_{Tp}(t)$) du paramètre de système variable ($\rho(t)$) en conservant la variance de temps de la matrice de système ($A_r$) résultante du système total rétrocouplé de telle sorte que les signes des valeurs propres ($\lambda_1$) contenant le paramètre de système ($\rho(t)$) de la matrice de système ($A_r$) résultante, sont indépendants du signe du paramètre de système ($\rho(t)$) variable.

2. Procédé selon la revendication 1, **caractérisé en ce que** c'est la valeur d'état ($x_i$), qui est multipliée par le paramètre de système variable ($\rho(t)$) ou une valeur moyennée par sections ($\rho_{TP}(t)$), du paramètre de système variable ($\rho(t)$), qui possède par le biais du paramètre de système variable ($\rho(t)$) une dépendance fonctionnelle d'une des valeurs d'entrée ($u_i$) du système (1), le régulateur agissant sur cette valeur d'entrée ($u_i$).

**3.** Procédé selon l'une quelconque des revendications précédentes pour la régulation d'un système de convertisseur électronique de puissance de commutation, comprenant un convertisseur avec des commutateurs à semi-conducteurs commutables, au moins une capacité C reliée à un côté en tension continue du convertisseur, qui forme un circuit intermédiaire et au moins un montage en série d'inductivité L et de résistance R relié à un côté en tension alternative du convertisseur, **caractérisé en ce que** la tension du circuit intermédiaire ($U_{DC}$) et le courant ($i_L$) sont utilisés comme valeurs d'état ($x_i$) par l'inductivité L et la tension de convertisseur ($u_{conv}$) sur le côté en tension alternative en tant que valeur d'entrée ($u_i$), un premier paramètre de système variable ($\rho(t)$) ou une valeur moyennée par sections ($\rho_{TP}(t)$) du paramètre de système variable ($\rho(t)$) étant formée par le rapport de modulation, qui décrit le rapport entre la tension de convertisseur ($u_{conv}$) et la tension de circuit intermédiaire ($u_{DC}$) et **en ce que** la tension de circuit intermédiaire ($u_{DC}$) dans le régulateur est multipliée par le premier paramètre de système variable ($\rho(t)$) ou la valeur moyennée par sections ($\rho_{TP}(t)$) du paramètre de système variable ($\rho(t)$) et le courant ($i_L$) par l'inductivité L par une constante négative et la combinaison linéaire de ces produits est soustraite de la tension de convertisseur ($u_{conv}$).

**4.** Procédé selon la revendication 3 pour la régulation d'un système de convertisseur électronique de puissance de commutation avec n connexions en tension alternative auxquelles s'applique respectivement une tension de convertisseur ($u_{conv1}$, $u_{conv2}$,..... $u_{convn}$) et auxquelles est relié respectivement un montage en série à partir d'inductivité L et de résistance R, **caractérisé en ce qu'**on utilise la tension de circuit intermédiaire ($u_{DC}$) en tant que première valeur d'état ($x_i$), le courant ($i_{L1}$, $i_{L2}$,.... $i_{Ln}$) en tant qu'autres valeurs d'état de chaque inductivité L et la tension de convertisseur ($U_{conv1}$, $U_{conv2}$,..... $U_{convn}$) en tant que valeur d'entrée ($u_i$), le rapport de modulation entre chaque tension de convertisseur ($U_{conv1}$, $U_{conv2}$,... $u_{convn}$) et la tension de circuit intermédiaire ($U_{DC}$) étant formé par un paramètre de système variable ($\rho_1(t)$, ($\rho_2(t)$,..... $\rho_n(t)$) et **en ce qu'**un régulateur (2) est utilisé avec une matrice de régulateur K du type

$$K = \begin{pmatrix} K_{C1} & K_L & 0 & ... & 0 \\ K_{C2} & 0 & K_L & ... & 0 \\ \vdots & \vdots & \vdots & \ddots & \vdots \\ K_{Cn} & 0 & 0 & ... & K_L \end{pmatrix}$$

dans laquelle :

Kci = $K_C \cdot \rho_1(t)$ ou $K_{C1}$ = $K_C \cdot \rho_{TP1}(t)$
$K_{C2}$ = $K_C \cdot \rho_2(t)$ ou $K_{C2}$ = $K_C \cdot \rho_{TP2}(t)$
Kcn = $K_C \cdot \rho_n(t)$ ou $K_{Cn}$ = $K_C \cdot \rho_{TPn}(t)$, et
$K_L$ est une constante positive quelconque, $K_C$ une constante négative, qui suffit à la condition $K_C \geq$ - C . ($K_L$ + R)$^2$/(4.n.L) et $\rho_i(t)$ avec i = 1 à n étant le rapport de modulation et $\rho_{Tpi}(t)$ avec i = 1 à n le rapport de modulation moyenné par sections entre la i$^{ème}$ tension de convertisseur ($U_{conv1}$, $U_{conv2}$,... $u_{convn}$) et la tension de circuit intermédiaire ($u_{DC}$) .

**5.** Procédé selon l'une quelconque des revendications précédentes, **caractérisé en ce que** la valeur moyennée ($\rho_{Tp}(t)$) correspond au paramètre de système variable ($\rho(t)$) moyenné sur une période d'impulsion.

**6.** Procédé selon la revendication 4 ou 5, **caractérisé en ce que** la constante $K_L$ est dans la gamme se situant entre 0,1 et 100.

**7.** Procédé selon la revendication 4 ou 5, **caractérisé en ce que** la constante $K_C$ a la valeur -1.

**8.** Programme de traitement de données pour l'exécution du procédé selon l'une quelconque des revendications 1 à 7.

**9.** Support de données avec un programme de traitement de données selon la revendication 8.

**10.** Système de traitement de données sur lequel est chargé un programme de traitement de données selon la revendication 8.

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **O. FÖLLINGER.** Entwurf zeitvarianter Systeme durch Polgabe - Design of time varying systems by pole assignment. *Regelungstechnik Band,* 01. Januar 1978, vol. 26 (6), ISSN 0340-434X, 189-196